# EUROPÄISCHE PATENTSCHRIFT

(11) **EP 2 199 881 B1**
(45) Veröffentlichungstag und Bekanntmachung des Hinweises auf die Patenterteilung: **24.04.2013**
(21) Anmeldenummer: 08172193.8
(22) Anmeldetag: 18.12.2008
(51) Int. Cl.: G05B 19/042

(54) **Feldgerät der Automatisierungstechnik**
Field device for automation technology
Appareil de terrain de la technique d'automatisation

(43) Veröffentlichungstag der Anmeldung: 23.06.2010
(73) Patentinhaber: Endress + Hauser Process Solutions AG, 4153 Reinach (CH)
(72) Erfinder: Seiler, Christian, 79424 Auggen (DE); Fiedler, Marc, 4102 Binningen (CH); Gerenzani, Sergio, 20056 Milano (IT)
(74) Vertreter: Andres, Angelika Maria

(56) Entgegenhaltungen:
- WO-A-2008/127657
- US-A1- 2008 273 518
- US-A1- 2008 291 009

## Beschreibung

Die Erfindung betrifft ein Feldgerät der Automatisierungstechnik, das über eine Zweidrahtleitung oder eine dem Feldgerät zugeordnete Energiequelle mit begrenzter Energiereserve gespeist ist, mit einer drahtgebundenen Kommunikationsschnittstelle mit zumindest einem Kommunikationskanal und mit einer der Kommunikationsschnittstelle zugeordneten Funktionseinheit, die derart ausgebildet ist, dass sie das Senden und/oder Empfangen von digitalen Kommunikationssignalen über die Kommunikationsschnittstelle durchführt.

In der Prozessautomatisierungstechnik ebenso wie in der Fertigungsautomatisierungstechnik werden vielfach Feldgeräte eingesetzt, die zur Erfassung und/oder Beeinflussung von Prozessgrößen dienen. Zur Erfassung von Prozessgrößen dienen Messgeräte bzw. Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Zur Beeinflussung von Prozessgrößen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann.

Als Feldgeräte werden im Prinzip alle Geräte bezeichnet, die prozessnah eingesetzt werden und die prozessrelevante Informationen liefern oder verarbeiten. Neben den zuvor genannten Messgeräten/Sensoren und Aktoren werden als Feldgeräte allgemein auch solche Einheiten bezeichnet, die direkt an einem Feldbus angeschlossen sind und zur Kommunikation mit den übergeordneten Einheiten dienen, wie z.B. Remote I/Os, Gateways, Linking Devices und Wireless Adapters. Eine Vielzahl solcher Feldgeräte wird von der Endress + Hauser-Gruppe hergestellt und vertrieben.

In modernen Industrieanlagen sind Feldgeräte in der Regel über Feldbussysteme, wie z.B. (Profibus®, Foundation Fieldbus®, HART®, etc. mit übergeordneten Einheiten verbunden. Normalerweise handelt es sich bei den übergeordneten Einheiten um Leitsysteme bzw. Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das angeschlossene Bussystem an eine oder gegebenenfalls auch an mehrere übergeordnete Einheit(en) übermittelt. Daneben ist auch eine Datenübertragung von der übergeordneten Einheit über das Bussystem an die Feldgeräte erforderlich; diese dient insbesondere zur Konfigurierung und Parametrierung von Feldgeräten oder zu Diagnosezwecken. Allgemein gesprochen, wird das Feldgerät über das Bussystem von der übergeordneten Einheit her bedient.

Neben einer drahtgebundenen Datenübertragung zwischen den Feldgeräten und der übergeordneten Einheit besteht auch die Möglichkeit einer drahtlosen Datenübertragung. Insbesondere in den Bussystemen Profibus®, Foundation Fieldbus® und HART® ist eine drahtlose Datenübertragung über Funk spezifiziert. Ferner sind Funknetzwerke für Sensoren in dem Standard IEEE 802.15.4 näher spezifiziert.

Zur Realisierung einer drahtlosen Datenübertragung sind neuere Feldgeräte, insbesondere Sensoren und Aktoren, teilweise als Funk-Feldgeräte ausgebildet. Diese weisen in der Regel eine Funkeinheit und eine Stromquelle als integrale Bestandteile auf. Dabei können die Funkeinheit und die Stromquelle in dem Feldgerät selbst oder in einem dauerhaft an dem Feldgerät angeschlossenen Funkmodul vorgesehen sein. Durch die Stromquelle wird eine autarke Energieversorgung des Feldgerätes ermöglicht.

Daneben besteht die Möglichkeit, Feldgeräte ohne Funkeinheiten - also die installierte Basis - durch die Kopplung mit jeweils einem Wireless Adapter, der eine Funkeinheit aufweist, zu einem Funk-Feldgerät aufzurüsten. Ein entsprechender Wireless Adapter ist beispielsweise in der Druckschrift WO 2005/103851 A1 beschrieben. Der Wireless Adapter wird in der Regel an eine Feldbus-Kommunikationsschnittstelle des Feldgerätes lösbar angeschlossen. Über die Feldbus-Kommunikationsschnittstelle kann das Feldgerät die über das Bussystem zu übermittelnden Daten an den Wireless Adapter senden, der diese dann über Funk an den Zielort übermittelt. Umgekehrt kann der Wireless Adapter über Funk Daten empfangen und über die Feldbus-Kommunikationsschnittstelle an das Feldgerät weiterleiten. Die Versorgung des Feldgeräts mit elektrischer Leistung erfolgt dann in der Regel über eine Energieversorgungseinheit des Wireless Adapters.

Bei autarken Funk-Feldgeräten mit oder ohne Wireless Adapter wird die Kommunikation, beispielsweise mit einer übergeordneten Einheit, in der Regel über die drahtlose Kommunikationsschnittstelle des Funk-Feldgerätes bzw. des Wireless Adapters abgewickelt. Zusätzlich weisen solche Funk-Feldgeräte bzw. Wireless Adapter in der Regel eine drahtgebundene Kommunikationsschnittstelle auf. Beispielsweise ist in dem HART®-Standard vorgesehen, dass Funk-Feldgeräte neben einer drahtlosen Schnittstelle auch eine drahtgebundene Kommunikationsschnittstelle aufweisen müssen. Über solch eine drahtgebundene Kommunikationsschnittstelle ist beispielsweise vor Ort eine Konfiguration des Funk-Feldgerätes bzw. des Wireless Adapters über eine Service- und/oder Bedieneinheit, wie beispielsweise einen Handheld Communicator, die/der an der drahtgebundenen Kommunikationsschnittstelle angeschlossen wird, möglich. Ferner kann die drahtgebundene Kommunikationsschnittstelle als Feldbus-Kommunikationsschnittstelle ausgebildet sein, so dass die Kommunikation darüber entsprechend einem Bussystem, wie beispielsweise entsprechend einem der standardisierten Bussysteme Profibus®, Foundation Fieldbus® oder HART®, abgewickelt wird. Über solch eine Feldbus-Kommunikationsschnittstelle kann das Funk-Feldgerät bzw. der Wireless Adapter auch an einen entsprechenden drahtgebundenen Feldbus angeschlossen werden. Die Energieversorgungseinheit bzw. die Stromquelle eines Wireless Adapters oder eines Funk-Feldgerätes ist üblicherweise eine Batterie oder ein Akku.

Bei Feldgeräten, denen nur ein begrenzte Energiereserve zu Verfügung steht, muss darauf geachtet werden, dass keine Energie unnötig verbraucht wird. Eine effektive Methode zur Energieeinsparung bei Zweidraht- oder Funk-Feldgeräten besteht darin, die Feldgeräte getaktet zwischen Betriebsphasen und Ruhephasen zu betreiben. Während der Ruhephasen wird die Energiezufuhr zu den einzelnen Systemkomponenten gedrosselt, oder die Komponenten werden abgeschaltet. Oftmals redet man in diesem Zusammenhang davon, dass die Feldgeräte in den Sleep-Mode geschaltet werden.

Der Großteil der installierten Basis an Feldgeräten besteht heute aus HART-Geräten, also Feldgeräte, die über den HART-Standard mit einer übergeordneten Steuereinheit kommunizieren. Diese Feldgeräte müssen jederzeit in der Lage sein, auf Kommunikationsanfragen der Steuereinheit reagieren zu können. Entsprechende Kommunikationsanfragen treten beispielsweise im Falle einer Konfigurierung oder Parametrierung des Feldgeräts oder im Fall des Absendens eines Steuerbefehls an das Feldgerät auf, oder die Steuereinheit fordert von dem Feldgerät eine Messwertanfrage, um Information über den aktuellen Messwert zu erhalten. Es versteht sich von selbst, dass das Konfigurieren des Feldgeräts relativ selten erfolgt. Je nach Applikation erfolgt die Messwertabfrage ebenfalls in relativ großen Zeiträumen. Würde das Feldgerät trotz der sporadischen Kommunikationsanfragen die kommunikationsrelevanten Komponenten ständig mit Energie versorgen und in Bereitschaft halten, so würde ein Großteil der Zeit Energie verschwendet. Im Falle von z.B. batteriebetriebenen Feldgeräten, oder Feldgeräten, denen über eine Zweidrahtleitung nur eine begrenzte Energiemenge zur Verfügung steht, ist eine derartige Energieverschwendung nicht akzeptabel. Bei einer Versorgung des Feldgeräts durch eine Batterie, nimmt die Lebensdauer der Batterie ab. Im Fall einer Zweidrahtversorgung geht die Energie, die für die stete Kommunikationsbereitschaft aufgewendet werden muss, anderen Komponenten des Feldgeräts verloren.

US 2008/029109 (Nelson Richard et. al) zeigt ein Feldgerät, das mit einer Prozessregelschleife verbunden ist und eine Überwachungsshaltung aufweist, welche Überwachungsshaltung die Energieversorgung des Feldgerätes in Abhängigkeit eines über die Prozessregelschleife übertragenen Signals steuert.

WO 2008/127657 A (HART COMM FOUNDATION) zeigt einen sog. Wireless Adapter, der neben der drahtlosen Kommunikationsschnittstelle auch über eine drachtgebunde Kommunikationsschnittstelle verfügt.

Der Erfindung liegt die Aufgabe zugrunde, bei ständiger Kommunikationsbereitschaft des Feldgeräts den Energiebedarf zu minimieren.

Die Aufgabe wird dadurch gelöst, dass die Funktionseinheit zwecks Energieeinsparung nur in aktiven Betriebsphasen eingeschaltet ist, während sie in den Ruhephasen ausgeschaltet ist. Erfindungsgemäß ist eine Detektionsschaltung vorgesehen, die ein an der Kommunikationsschnittstelle anliegendes Kommunikationssignal detektiert und automatisch die Funktionseinheit aktiviert. Hierdurch wird erreicht, dass automatisch immer dann - und nur dann -, wenn ein Kommunikationssignal an der Kommunikationsschnittstellte detektiert wird, eine Umschaltung vom Sleep-Mode (Ruhephase) in den Betriebsmode erfolgt. Liegt im eingeschalteten Zustand kein Kommunikationssignal an der Kommunikationsschnittstelle mehr an, so schaltet die Funktionseinheit die kommunikationsrelevanten Komponenten wieder zurück in den Sleep-Mode. Die Belastung der Energieversorgungseinheit mit einer begrenzten Energiereserve, hierbei handelt es sich bevorzugt um eine Batterie, um einen Akku oder um eine Brennstoffzelle, wird mittels des erfindungsgemäßen Feldgeräts erheblich reduziert. Folglich wird die Lebensdauer der Batterie verlängert. Insbesondere werden alle nicht benötigten stromverbrauchenden Komponenten des Feldgeräts abgeschaltet oder in einen Sleep-Mode geschaltet. Insbesondere trifft dies auch auf die Komponenten zu, die für die Kommunikation benötigt werden, also den Mikroprozessor, das HART Modem, usw.

Gemäß einer vorteilhaften Ausgestaltung des erfindungsgemäßen Feldgeräts handelt es sich bei der Kommunikationsschnittstelle um eine Feldbus-Schnittstelle, die nach einem der in der Automatisierungstechnik verwendeten Kommunikations-Standards ausgebildet ist. In der Automatisierungstechnik etablierte Standards basieren auf dem HART-, dem Profibus- oder dem Foundation Fieldbus- Protokoll.

Als besonders vorteilhaft wird es im Zusammenhang mit dem erfindungsgemäßen Feldgerät angesehen, wenn die Detektionsschaltung eine hochohmig angekoppelte Komparatorschaltung aufweist, die den Kommunikationskanal auf Strom- und/oder Spannungsmodulationen hin überwacht. Hierbei sind die Strom- und/oder Spannungsmodulationen ein eindeutiges Anzeichen dafür, dass ein Kommunikationssignal auf dem Kommunikationskanal vorhanden ist. Eine hochohmig angekoppelte Komparatorschaltung mit sehr geringem Energiebedarf überwacht den zumindest einen Kommunikationskanal auf auftretende Strom- oder Spannungsmodulationen hin. Erfindungsgemäß werden bei der Detektion von Strom- oder Spannungsmodulationen auf dem Kommunikationskanal die im Sleep-Mode befindlichen kommunikationsrelevanten Komponenten aktiviert, insbesondere wird der Mikroprozessor unmittelbar aufgeweckt.
Die durch das Aufwecken entstehende kurze Verzögerung ist nicht von Bedeutung, da vor jedem Kommunikations-Telegramm standardmäßig eine Präambel gesendet wird und das Feldgerät innerhalb dieser Phase kommunikationsbereit ist.

Bevorzugt weist die Komparatorschaltung einen Niedrigenergie-Komparator mit Open-Drain Ausgang auf, der im Falle des Auftretens eines Kommunikationssignals eine Positiv-Negativ-Flanke erzeugt, welche einen der Kommunikationsschaltung zugeordneten Mikroprozessor aktiv schaltet, so dass die nächste Betriebsphase aktiviert wird. Um den Energiebedarf der Detektionsschaltung zu minimieren, kommen Low-Power-Komparatoren, sog. Nanopower-Komparatoren mit Open-Drain Ausgang zum Einsatz. Diese sind so beschaltet, dass nur ein - die Batterie bzw. die Energieversorgung belastender - Strom am Ausgang des Komparators fließt, wenn auch tatsächlich ein Kommunikationssignal, insbesondere ein HART-Kommunikationssignal detektiert wird. In diesem Fall schaltet der Ausgang des Komparators gegen Masse.

Weiterhin ist vorgesehen, dass der Komparatorschaltung ein Filter vorgeschaltet ist, das so ausgelegt ist, dass im Wesentlichen nur die von Störsignalen befreiten Kommunikationssignale an die Komparatorschaltung durchgestellt werden. Als besonders vorteilhaft wird es erachtet, wenn es sich bei dem Filter um einen Tiefpass handelt, der im Falle eines Kommunikationssignals, das der Spezifikation der HART-Kommunikation entspricht, Frequenzen unterhalb von 2200Hz passieren lässt. Durch das passive Filter wird die Störanfälligkeit der Detektionsschaltung im Hinblick auf hochfrequente Störsignale stark eingeschränkt. Durch das Filter wird ein Ansprechen der Detektionsschaltung auf Kommunikationssignale eingeschränkt, die im z.B. für HART-Kommunikationssignale typischen Frequenzbereich bis 2200 Hz liegen. Zeigt sich auf dem Kommunikationskanal ein Kommunikationssignal auf, so generiert die Detektionsschaltung eine Positiv-Negativ-Flanke, die einen Interrupt am Mikroprozessor auslöst und das System, bevorzugt den Mikroprozessor 'weckt'.

Eine vorteilhafte Ausgestaltung des erfindungsgemäßen Feldgeräts schlägt vor, dass dem Filter bzw. dem Tiefpass ein Dämpfungsglied vorgeschaltet ist.

Dieses ist so ausgelegt, dass nur ein reduzierter Anteil des Kommunikationssignals als Eingangsstrom an einen ersten Eingang der Komparatorschaltung gelangt, während der Differenzanteil des Kommunikationssignals zur Kommunikationsschaltung weitergeleitet wird.

Weiterhin ist vorgesehen, dass dem Feldgerät eine drahtlose Kommunikationsschnittstelle zugeordnet ist, die nach einem der in der Automatisierungstechnik verwendeten Kommunikations-Standards ausgebildet ist.

Alternativ ist vorgesehen, dass die drahtlose Kommunkationsschnittstelle einem Funkadapter zugeordnet ist, durch den ein herkömmliches Feldgerät in ein autarkes Funk-Feldgerät aufgerüstet wird. Weiterhin ist vorgesehen, dass im Falle eines Funk-Feldgeräts oder eines Feldgeräts mit einem Funkadapter eine Funkeinheit und eine Energiequelle in das Feldgerät bzw. in den Funkadapter integriert sind.

Die Erfindung wird anhand der nachfolgenden Figuren näher erläutert. Es zeigt:
Fig. 1: eine schematische Darstellung eines Funknetzwerks mit mehreren Feldgeräten,
Fig. 2a: ein Blockschaltbild einer ersten Ausgestaltung des erfindungsgemäßen Feldgeräts,
Fig. 2b: ein Blockschaltbild einer zweiten Ausgestaltung des erfindungsgemäßen Feldgeräts und
Fig. 3: ein Blockschaltbild, das eine bevorzugte Ausgestaltung der Detektionsschaltung des erfindungsgemäßen Feldgeräts zeigt.

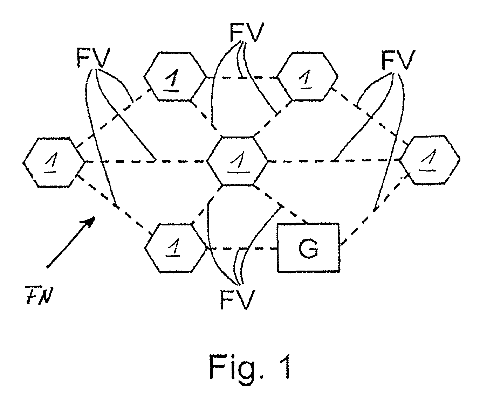

In Fig. 1 ist ein Funknetzwerk mit mehreren Feldgeräten 1, die jeweils als Funk-Feldgeräte ausgebildet sind, und einem Gateway G dargestellt. Die Feldgeräte 1 stehen untereinander und mit dem Gateway G jeweils in Funkverbindung FV, was in Fig. 1 durch die gestrichelten Linien dargestellt ist. Dadurch, dass die Feldgeräte 1 und das Gateway G jeweils über mehrere Funkverbindungen FV in Verbindung stehen, kann selbst bei einem Ausfall einer der Funkverbindungen FV die Kommunikation über eine der anderen Funkverbindungen FV aufrechterhalten werden.

Als Funkübertragungstechnologien für die Funkverbindungen FV sind beispielsweise Frequency Hopping Spread Spectrum (FHSS) oder Direct Sequence Spread Spectrum (DSSS) Verfahren geeignet. Aufgrund der benötigten geringen Sendeleistungen ist auch die Ultrawideband-Technologie (UWB) sehr gut geeignet.

Bei dem Gateway G kann es sich um eine Fernübertragungseinheit, z.B. das Produkt "Fieldgate" der Firma Endress + Hauser, handeln. In diesem Fall kann das Gateway G weltweit zum Beispiel via Internet, GSM oder Festnetz mit einer übergeordneten Einheit kommunizieren. Ferner kann/können eine (nicht dargestellte) übergeordnete Einheit und/oder ein (nicht dargestelltes) Bediengerät auch direkt über eine entsprechende Funkverbindung mit dem dargestellten Funknetzwerk kommunizieren.

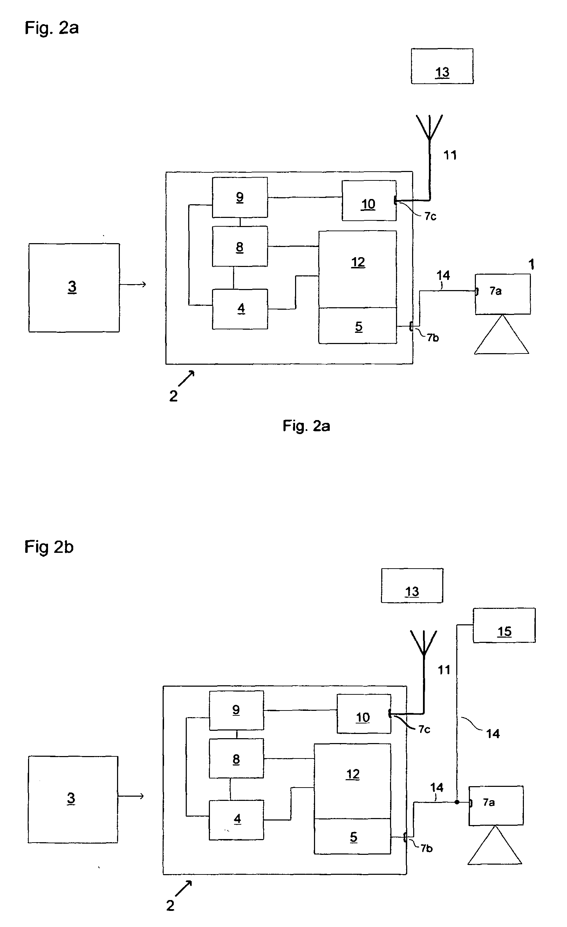

In den Figuren Fig. 2a und Fig. 2b sind schematische Darstellungen von zwei bevorzugten Ausgestaltungen eines Feldgeräts 1 dargestellt, das jeweils mittels eines Wireless Adapters 2 zu einem Funk-Feldgerät aufgerüstet ist. Das Feldgerät 1 besteht aus einem Messwertaufnehmer bzw. Sensor 15 und einem Messumformer 16. Das Feldgerät 1 kann - wie bereits zuvor ausführlich dargelegt - zu Bestimmung und/oder Beeinflussung beliebiger Prozessgrößen ausgelegt sein.

In dem Funkadapter 2 sind unterschiedliche Komponenten, bevorzugt auf einer Platine, angeordnet. Über die Verbindungsleitungen 14 steht der Funkadapter 2 mit dem Messumformer 16 in Verbindung. Weiterhin ist eine Baugruppe zur Spannungswandlung 4 und ein Kommunikationsmodul 8 bzw. eine Kommunikationsschnittstelle 8 vorgesehen. Die Baugruppe zur Spannungswandlung 4 ist mit dem Kommunikationsmodul 8 und dem Mikroprozessor 9 verbunden.

Das Feldgerät 1 und der Wireless Adapter 2 stehen miteinander in einer Kommunikationsverbindung. Bei der drahtgebundenen Kommunikationsschnittstelle 7a, 7b handelt es sich bevorzugt um eine HART@-Kommunikationsschnittstelle. Der Kommunikationsschnittstelle 7a, 7b ist eine Funktionseinheit 12 zugeordnet, die das Senden und/oder Empfangen von digitalen Signalen (z.B. entsprechend dem HART®-Standard) über die Kommunikationsschnittstelle 7a durchführt. Über die Kommunikationsschnittstelle 7a kann das Feldgerät 1 auch - alternativ zu dem dargestellten Anschluss an den Wireless Adapter 2 - an ein drahtgebundenes, in der Automatisierungstechnik gebräuchliches Feldbussystem, z.B. ein HART®-Feldbussystem, angeschlossen werden.

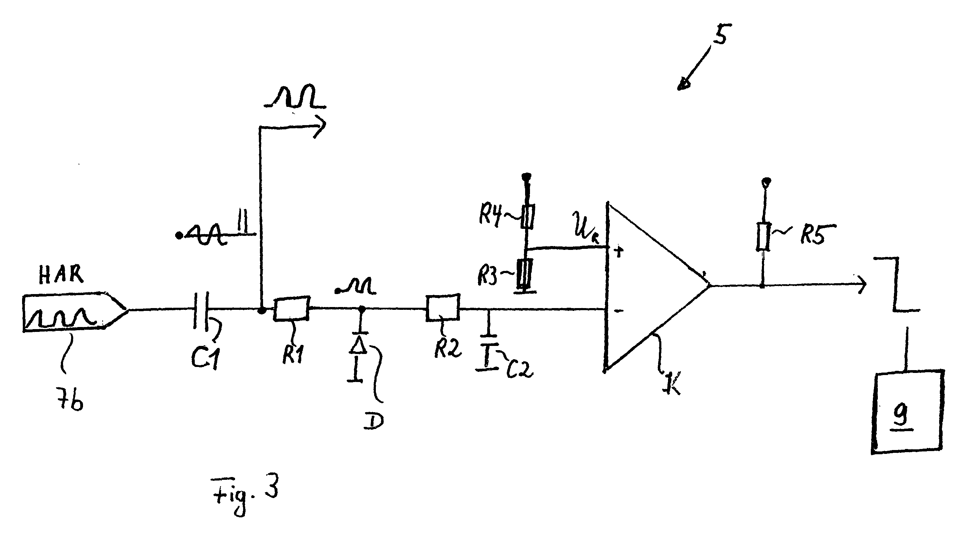

In unmittelbarer Nachbarschaft zu der Kommunikationsschnittstelle 7b und der Funktionseinheit 12 ist die Detektionseinheit 5 angeordnet. Diese wird im Zusammenhang mit der Fig. 3 im Detail erläutert.

Der Wireless Adapter 4 weist - wie bereits erwähnt, eine Steuereinheit in Form eines Mikroprozessors 9 auf. Zum Datenaustausch über das FunkNetzwerk FN ist der Mikroprozessor 9 mit einer Funkeinheit 10 verbunden, die ein RF-Chipset und eine Antenne 11 aufweist. Die Funkeinheit 10 ist dabei derart ausgebildet, dass die drahtlose Kommunikation gemäß einem der in der Automatisierungstechnik gebräuchlichen Standards, bevorzugt gemäß dem HART®-Standard, erfolgt. Der Mikroprozessor 9 ist ferner mit einem nicht gesondert dargestellten Datenspeicher verbunden, in dem unter anderem Parameter des Wireless Adapters 2 abgelegt sind. Zur Kommunikation mit dem Feldgerät 1 weist der Wireless Adapter 2 eine drahtgebundene Kommunikationsschnittstelle 7b auf, der wiederum eine Funktionseinheit, die das Senden und/oder Empfangen von digitalen Signalen über die Kommunikationsschnittstelle 7b durchführt, zugeordnet ist.

Bei den in den Figuren dargestellten Anordnungen sind die Kommunikationsschnittstelle 7a des Feldgerätes 1 und die Kommunikationsschnittstelle 7b des Wireless Adapters 2 über eine 2-Leiter-Verbindungsleitung 14 miteinander verbunden. Über diese Verbindung erfolgt sowohl die Kommunikation zwischen dem Feldgerät 1 und dem Wireless Adapter 2 als auch die Stromversorgung des Feldgerätes 1 durch den Wireless Adapter 2.

Zwecks Bereitstellung der Stromversorgung des Feldgerätes 1 und des Wireless Adapters 2 ist dem Wireless Adapter 2 eine Energieversorgungseinheit 3 zugeordnet. Die Energieversorgungseinheit 3 ist in der Lage, das Feldgerät 1 bzw. den Funkadapter 2 und das Feldgerät 1 mit einer begrenzten Energie zu versorgen. Bei der Energieversorgungseinheit 3 handelt es sich z.B. um eine Batterie, einen Akku, ein Solarpanel oder eine Brennstoffstelle. Bei dem Feldgerät 1 bzw. bei dem hier dargestellten Funkadapter 2 mit Feldgerät 1 handelt es sich folglich um energieautarke Einheiten.

In den Figuren Fig. 2a und Fig. 2b sind Fälle dargestellt, in denen das Funkmodul 10 in einen Funkadapter 2 integriert ist. Durch Anschluss des Funkadapters 2 an das herkömmliche Feldgerät 1 lässt sich das Feldgerät 1 in ein Funk-Feldgerät umrüsten. Das Feldgerät 1 wird hierbei mittels der Energiequelle 3 gespeist (Fig. 2a) oder bezieht seine Energie aus einer anderen Quelle, zum Beispiel einem Netzteil 15 (Fig. 2b). Es versteht sich von selbst, dass das Funkmodul 10 auch direkt in das Feldgerät 1 integriert sein kann. Weiterhin kann das Feldgerät über die Kommunikatonsschnittstelle 7a direkt an einen Feldbus angeschlossen werden, der z.B. entsprechend dem HART-Standard arbeitet. In diesem Fall ist die Detektionsschaltung 5 der Kommunikationsschnittstelle 7a des Feldgeräts 1 zugeordnet. Es versteht sich hierbei von selbst, dass ein entsprechendes Feldgerät 1 auch ohne Funkmodul ausgestattet sein kann. Dann hilft die Schaltung dabei, den Energiehaushalt zu optimieren.

In Fig. 3 ist ein Blockschaltbild dargestellt, das eine bevorzugte Ausgestaltung der Detektionsschaltung 5 des erfindungsgemäßen Feldgeräts 1 zeigt. Ein ankommendes HART-Kommunikationssignal wird über ein Dämpfungsglied, gebildet durch den Kondensator C1 und den Widerstand R1, geleitet. Hierdurch wird erreicht, dass nur ein kleiner Bruchteil des ankommenden HART-Signals zur Aktivierung bzw. Deaktivierung der Detektionsschaltung 5 verwendet wird; der Großteil des Kommunikationssignals wird ausgekoppelt und zur Analyse seines Inhalts weiter verwendet.

Mittels der Diode D wird die negative Halbwelle aus dem Kommunikationssignal ausgekoppelt. Über das Tiefpassfilter, gebildet aus R2 und C2, wird das Kommunikationssignal von hochfrequenten Störsignalen befreit. Anschließend gelangt das bereinigte Kommunikationssignal zum Minuseingang der Komparatorschaltung K, an deren Pluseingang die Referenzspannung *U_{R}* anliegt. Die Höhe der Referenzspannung *U_{R}* ist über den Spannungsteiler, gebildet aus R3 und R4, festgelegt.

Ein Wireless Adapter kann mehrere Kommunikationskanäle aufweisen. Hier muss die HART-Detektionsschaltung doppelt ausgelegt sein, so dass sie jeden der beiden Kommunikationskanäle auf ein Kommunikationssignal hin überwacht.

Im Falle einer Kommunikation auf einem der Kommunikationskanäle werden Interrupts am Mikroprozessor 8 ausgelöst. Somit lässt sich auch jeweils der Kommunikationskanal identifizieren, auf dem die Kommunikation stattfindet. Der Mikroprozessor 8 steuert dann das Ein- und Ausschalten der zur Kommunikation nötigen Komponenten.

Erfindungsgemäß ist somit eine sehr energiesparende Autodetektion eines auf einem Kommunikationskanal übertragenen Kommunikationssignals möglich. Die Detektion eines ankommenden Kommunikationssignals führt nachfolgend automatisch dazu, dass im Sleep-Mode befindliche Komponenten der Kommunikationsschaltung und/oder des Feldgeräts 1 bzw. des Wireless Adapters 2 unmittelbar aktiviert werden. Üblicherweise erfolgt zuerst die Aktivierung des Mikroprozessors 8, der nachfolgend die benötigten Systemkomponenten aktiviert.

## Patentansprüche

1. Feldgerät (1) der Automatisierungstechnik, das über eine Zweidrahtleitung (14) oder einer dem Feldgerät (1) zugeordneten Energiequelle (3) mit begrenzter Energiereserve gespeist ist, mit einer drahtgebundenen Kommunikationsschnittstelle (7a) mit zumindest einem Kommunikationskanal und mit einer der Kommunikationsschnittstelle (7a, 7b) zugeordneten Funktionseinheit (12), die derart ausgebildet ist, dass sie das Senden und/oder Empfangen von digitalen Kommunikationssignalen über die Kommunikationsschnittstelle (7a, 7b) durchführt, wobei die Funktionseinheit (12) zwecks Energieeinsparung nur in aktiven Betriebsphasen eingeschaltet ist, während sie in den deaktiven Ruhephasen ausgeschaltet ist, und wobei eine Detektionsschaltung (5) vorgesehen ist, die ein an der Kommunikationsschnittstelle (7a, 7b) anliegendes Kommunikationssignal detektiert und automatisch die Funktionseinheit (12) aktiviert,
wobei die Detektionsschaltung (5) eine hochohmig angekoppelte Komparatorschaltung (K) aufweist, die den Kommunikationskanal auf Strom- und/oder Spannungsmodulationen hin überwacht, die ein Kommunikationssignal anzeigen, **dadurch gekennzeichnet, dass**
die Komparatorschaltung (K) einen Niedrigenergie-Komparator mit Open-Drain Ausgang aufweist, der im Falle des Auftretens eines Kommunikationssignals eine Positiv-Negativ-Flanke erzeugt, welche einen der Kommunikationsschaltung (12) zugeordneten Mikroprozessor (8) aktiv schaltet, so dass die Betriebsphase aktiviert wird.

2. Feldgerät nach Anspruch 1, wobei es sich bei der Kommunikationsschnittstelle (7a, 7b) um eine Feldbus-Schnittstelle handelt, die nach einem der in der Automatisierungstechnik verwendeten Kommunikations-Standards ausgebildet ist.

3. Feldgerät nach Anspruch 1 oder 2, wobei der Komparatorschaltung (K) ein Filter (R2, C2) vorgeschaltet ist, das so ausgelegt ist, dass im Wesentlichen nur die von Störsignalen befreiten Kommunikationssignale an die Komparatorschaltung (K) durchgestellt werden.

4. Feldgerät nach Anspruch 3, wobei es sich bei dem Filter (R2, C2) um einen Tiefpass handelt, der im Falle eines Kommunikationssignals, das der Spezifikation der HART-Kommunikation entspricht, Frequenzen unterhalb von 2200Hz passieren lässt.

5. Feldgerät nach Anspruch 3 oder 4, wobei dem Filter (R2, C2) bzw. dem Tiefpass ein Dämpfungsglied (C1) vorgeschaltet ist, das so ausgelegt ist, dass nur ein reduzierter Anteil des Kommunikationssignals als Eingangsstrom an einen ersten Eingang der Komparatorschaltung (K) gelangt, während der Differenzanteil des Kommunikationssignals zur Kommunikationsschaltung gelangt.

6. Feldgerät nach Anspruch 1, wobei dem Feldgerät eine drahtlose Kommunikationsschnittstelle (7c) zugeordnet ist, die nach einem der in der Automatisierungstechnik verwendeten Kommunikations-Standards ausgebildet ist.

7. Feldgerät nach Anspruch 6, wobei die drahtlose Kommunkationsschnittstelle einem Funkadapter (2) zugeordnet ist, durch den ein herkömmliches Feldgerät (1) in ein autarkes Funk-Feldgerät aufgerüstet wird.

8. Feldgerät nach Anspruch 1 oder 7, wobei im Falle eines Funk-Feldgeräts oder eines Feldgeräts (1) mit einem Funkadapter (2) eine Funkeinheit (10) und eine Energiequelle (3) in das Feldgerät (1) bzw. in den Funkadapter (2) integriert sind.

9. Feldgerät nach Anspruch 1 oder 8, wobei es sich bei der Energiequelle (3) um eine Batterie, um einen Akku oder um eine Brennstoffzelle handelt.

## Claims

1. Field device (1) used in automation engineering, which is powered by a two-wire cable (14) or a power source (3), which is assigned to the field device (1) and has a limited energy reserve, with a wired communication interface (7a) with at least one communication channel and with a function unit (12), which is assigned to the communication interface (7a, 7b), said function unit designed in such a way that it sends and/or receives digital communication signals via the communication interface (7a, 7b), wherein - to save energy - the function unit (12) is only switched on in active operating phases and is switched off in the inactive idle phases, and wherein a detection circuit (5) is provided which detects a communication signal present at the communication interface (7a, 7b) and activates the function unit (12) automatically, wherein the detection circuit (5) has a comparator circuit (K) with high-impedance coupling that monitors the communication channel for current and/or voltage modulations that display a communication signal, **characterized in that** the comparator circuit (K) has a low-energy comparator with an open-drain output which - when a communication signal occurs - generates a positive-negative edge that switches to active a microprocessor (8) assigned to the communication circuit (12) so that the operating phase is activated.

2. Field device as claimed in Claim 1, wherein the communication interface (7a, 7b) is a fieldbus interface which is designed according to one of the communication standards used in automation engineering.

3. Field device as claimed in Claim 1 or 2, wherein a filter (R2, C2) is provided upstream from the comparator circuit (K) said filter being designed in such a way that essentially only the communication signals that are free from interference signals are passed on to the comparator circuit (K).

4. Field device as claimed in Claim 3, wherein the filter (R2, C2) is a low-pass filter that allows frequencies below 2200 Hz to pass in the event of a communication signal that corresponds to the HART communication specification.

5. Field device as claimed in Claim 3 or 4, wherein an attenuator (C1) is provided upstream from the filter (R2, C2) or the low-pass, said attenuator designed in such a way that only a reduced part of the communication signal reaches a first input of the comparator circuit (K) as an input current, while the differential part of the communication signal reaches the communication circuit.

6. Field device as claimed in Claim 1, wherein a wireless communication interface (7c) is assigned to the field device, said wireless communication interface being designed according to one of the communication standards used in automation engineering.

7. Field device as claimed in Claim 6, wherein the wireless communication interface is assigned to a wireless adapter (2) via which a conventional field device (1) is upgraded to a self-sustaining wireless field device.

8. Field device as claimed in Claim 1 or 7, wherein - in the case of a wireless field device or a field device (1) with a wireless adapter (2) - a wireless unit (10) and a power source (3) are integrated into the field device (1) or the wireless adapter (2).

9. Field device as claimed in Claim 1 or 8, wherein the power source (3) is a battery, a storage battery or a fuel cell.

## Revendications

1. Appareil de terrain (1) de technique d'automatisation, alimenté en réserve d'énergie limitée via un câble bifilaire (14) ou une source d'énergie (3) affectée à l'appareil de terrain (1), avec une interface de communication (7a) reliée par câble, avec au moins un canal de communication, et une unité fonctionnelle (12) affectée à l'interface de communication (7a, 7b), qui est conçue de manière à exécuter l'envoi et/ou la réception de signaux de communication numériques via l'interface de communication (7a, 7b), **caractérisé en ce que** l'unité fonctionnelle (12) est uniquement enclenchée pendant les phases de fonctionnement actives à des fins d'économie d'énergie, tandis qu'elle est désactivée pendant les phases de repos, **caractérisé en ce qu'**un circuit de détection (5) est prévu, détectant un signal de communication présent au niveau de l'interface de communication (7a, 7b) et activant automatiquement l'unité fonctionnelle (12), **caractérisé en ce que** le circuit de détection (5) présente un circuit comparateur (K) accouplé à haute impédance, qui surveille les modulations de courant et/ou de tension du canal de communication affichant un signal de communication, **caractérisé en ce que** le circuit comparateur (K) présente un comparateur à basse énergie avec sortie à drain ouvert, qui génère un flanc positif-négatif en cas d'apparition d'un signal de communication, commutant en phase active l'un des microprocesseurs (8) affectés au circuit de communication (12), si bien que la phase de fonctionnement est activée.

2. Appareil de terrain selon la revendication 1, **caractérisé en ce que** l'interface de communication (7a, 7b) est une interface de bus de terrain, qui est conçue selon l'un des standards de communication utilisés pour la technique d'automatisation.

3. Appareil de terrain selon la revendication 1 ou 2, **caractérisé en ce qu'**un filtre (R2, C2) est connecté en amont du circuit comparateur (K), qui est conçu de manière à ce que seuls les signaux de communication épurés des signaux parasites parviennent au circuit comparateur (K).

4. Appareil de terrain selon la revendication 3, **caractérisé en ce que** le filtre (R2, C2) est un filtre passe-bas, qui en cas de signal de communication, correspondant à la spécification de la communication HART, laisse passer des fréquences inférieures à 2 200 Hz.

5. Appareil de terrain selon la revendication 3 ou 4, **caractérisé en ce qu'**un atténuateur (C1) est connecté en amont du filtre (R2, C2) ou du filtre passe-bas, qui est conçu de manière à ce que seule une part réduite du signal de communication ne parvienne en tant que courant d'entrée à une première entrée du circuit comparateur (K), tandis que la part différentielle du signal de communication parvient au circuit de communication.

6. Appareil de terrain selon la revendication 1, **caractérisé en ce qu'**une interface de communication sans fil (7c) est affectée à l'appareil de terrain, qui est conçue selon l'un des standards de communication utilisés pour la technique d'automatisation.

7. Appareil de terrain selon la revendication 6, **caractérisé en ce que** l'interface de communication sans fil est affectée à un adaptateur radio (2), permettant de transformer un appareil de terrain traditionnel (1) en un appareil de terrain radio autonome.

8. Appareil de terrain selon la revendication 1 ou 7, **caractérisé en ce que**, dans le cas d'un appareil de terrain radio ou d'un appareil de terrain (1) avec un adaptateur radio (2), une unité fonctionnelle (10) et une source d'énergie (3) sont intégrées à l'appareil de terrain (1) ou à l'adaptateur radio (2).

9. Appareil de terrain selon la revendication 1 ou 8, **caractérisé en ce que** la source d'énergie (3) est une pile, un accumulateur ou une pile à combustible.
